# EUROPEAN PATENT APPLICATION

(11) **EP 3 848 670 A1**
(43) Date of publication of application: **14.07.2021**
(21) Application number: 18932407.2
(22) Date of filing: 07.09.2018
(51) Int. Cl.: G01C 3/00

(54) **LASER RANGING METHOD AND DEVICE**

(71) Applicant: SZ DJI Technology Co., Ltd., Shenzhen, Guangdong 518057 (CN)
(72) Inventor: LIU, Xiang, Shenzhen, Guangdong 518057 (CN); HONG, Xiaoping, Shenzhen, Guangdong 518057 (CN)
(74) Representative: Goddar, Heinz J.
(86) International application number: PCT/CN2018/104677
(87) International publication number: WO 2020/047858

(57) **Abstract**

Laser ranging method and apparatus are provided. The method includes controlling a target component to switch from a first state to a second state when the target component in a laser ranging apparatus is idle. Power consumption of the target component in the second state is less than power consumption in the first state. The laser ranging apparatus includes at least one emitting module, at least one receiving module, at least one sampling module, and at least one operation module. The target component is at least one device in at least one module in the laser ranging apparatus. The emitting module is configured to emit a laser pulse. The receiving module is configured to receive an optical signal returned by the laser pulses after being reflected by an object and convert the optical signal into an electrical signal. The sampling module is configured to perform sampling processing on the electrical signal to acquire a sampling result. The operation module is configured to determine a distance to the object according to the sampling result. The method and apparatus for laser ranging can reduce power consumption of laser ranging apparatus.

## Description

### COPYRIGHT STATEMENT

The content disclosed in the patent document contains copyrighted materials. The copyright is owned by the copyright owner. The copyright owner does not object to anyone copying the official records and archives of the patent document or patent disclosure in the Patent and Trademark Office.

### FIELD OF THE DISCLOSURE

The present application relates to the field of image processing, and, more particularly, relates to a laser ranging method and a laser ranging apparatus.

### BACKGROUND

In a laser ranging system, in order to ensure an accuracy of measurement, a ranging circuit will use high-performance (such as high bandwidth, high slew rate, etc.) analog chips to reduce a loss of signal quality and use high-performance (such as 15 high sample rates, high sampling accuracy, etc.) digital chips to provide sufficient sampling accuracy. The high-performance analog chips and digital chips usually consume a lot of power and emit a lot of heat during operation. A chip temperature can be 20°C higher than an ambient temperature or even higher, resulting in a serious reduction in an ambient temperature range where an entire system can work normally, and increasing a design cost of system cooling scheme.

### BRIEF SUMMARY OF THE DISCLOSURE

The present application provides a laser ranging method and a laser ranging apparatus, which can reduce the power consumption of the laser ranging apparatus.

A first aspect of the present application provides a laser ranging method. The method includes controlling a target component from a first state to a second state when the target component in a laser ranging apparatus is idle. Power consumption of the target component in the second state is less than that in the first state. The laser ranging apparatus includes at least one emitting module, at least one receiving module, at least one sampling module, and at least one operation module. The target component is at least one device in at least one module in the laser ranging apparatus. The emitting module is configured to emit a laser pulse. The receiving module is configured to receive an optical signal returned by the laser pulse after being reflected by an object and convert the optical signal into an electrical signal. The sampling module is configured to perform sampling processing on the electrical signals to acquire a sampling result. The operation module is configured to determine a distance to the object according to the sampling result.

A second aspect of the present application provides a laser ranging apparatus, which is configured to implement the above first aspect or the method in any possible implementation manners of the first aspect. Specifically, the device includes a unit for executing the above first aspect or any possible implementation manners of the first aspect.

A third aspect of the present application provides another laser ranging apparatus, which includes a memory and a processor. The memory is configured to store instructions. The processor is configured to execute instructions stored in the memory. When the processor executes the instructions stored in the memory, the execution causes the processor to execute the method in the first aspect or any possible implementation manners of the first aspect.

A fourth aspect of the present application provides a computer readable medium for storing computer programs. The computer programs include instructions for executing the method in the first aspect or any possible implementation manners of the first aspect.

A fifth aspect of the present application provides a computer program production including instructions. When the computer runs the instructions of the computer program product, the computer executes the laser ranging method in the first aspect or any possible implementation manners of the first aspect. Specifically, the computer program product can be run on the laser ranging apparatus of the above second aspect.

### BRIEF DESCRIPTION OF THE DRAWINGS

FIG. 1 illustrates a schematic diagram of a laser ranging apparatus consistent with various disclosed embodiments of the present application;
FIG. 2 illustrates another schematic diagram of the laser ranging apparatus consistent with various disclosed embodiments of the present application;
FIG. 3 illustrates a timing diagram of a single-channel laser ranging apparatus consistent with various disclosed embodiments of the present application;
FIG. 4 illustrates a timing diagram of a multi-channel laser ranging apparatus consistent with various disclosed embodiments of the present application;
FIG. 5 illustrates still another schematic diagram of the laser ranging apparatus consistent with various disclosed embodiments of the present application;
FIG. 6 illustrates a schematic flowchart of a laser ranging method consistent with various disclosed embodiments of the present application; and
FIG. 7 illustrates a schematic block diagram of the laser ranging apparatus consistent with various disclosed embodiments of the present application.

### DETAILED DESCRIPTION

The technical solutions in the embodiments of the present application will be described below in conjunction with the drawings.

Unless otherwise defined, all technical and scientific terms used herein have a same meaning as commonly understood by those skilled in the art. The terminology used in the specification of the present application herein is only for the purpose of describing specific embodiments and is not intended to limit the present application.

The present invention provides a laser ranging apparatus, which can be configured to measure a distance between a probe and the laser ranging apparatus. Further, the laser ranging apparatus can also detect a position of the probe relative to the laser ranging apparatus. In one embodiment, the laser ranging apparatus may include a radar, such as a lidar. The laser ranging apparatus can detect a distance between a detected object and the laser ranging apparatus by measuring time of light propagation, that is, time-of-flight (TOF) between the laser ranging apparatus and the probe. Alternatively, the laser ranging apparatus can also use other technologies to detect the distance between the detected object and the laser ranging apparatus, which is not limited herein.

The laser ranging apparatus is a perception system of the outside world, which can learn three-dimensional information of an outside world, and is no longer limited to a plane perception of the outside world such as cameras. Principle of the laser ranging apparatus is to actively emit a laser pulse signal to the outside, detect the reflected pulse signal, determine a distance to a measured object according to a time difference between the emission and the reception, and combine emission angle information of the light pulse to reconstruct three-dimensional depth information.

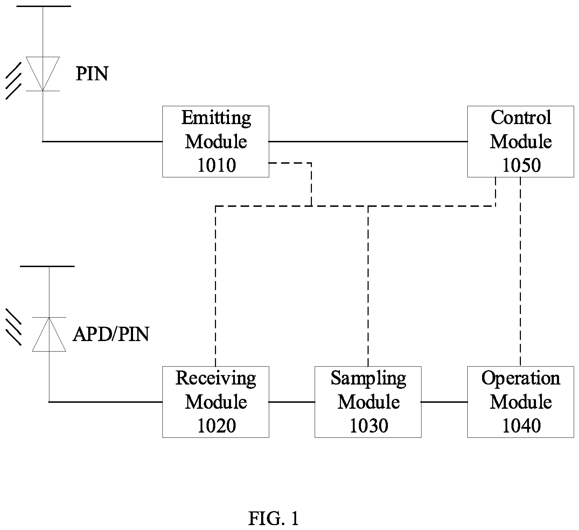

Specifically, FIG. 1 illustrates a schematic diagram of a laser ranging apparatus 1000. The laser ranging apparatus 1000 may include at least one emitting module 1010, at least one receiving module 1020, at least one sampling module 1030, and at least one operation module 1040. Optionally, the laser ranging apparatus 1000 may further include a control module 1050.

In FIG. 1, a laser ranging apparatus 1000 including the emitting module 1010, the receiving module 1020, the sampling module 1030, and the operation module 1040 is taken as an example. But the embodiments of the present application are not limited to the laser ranging apparatus 1000.

In the laser ranging apparatus 1000, the emitting module 1010 is configured to emit a laser pulse. The receiving module 1020 is configured to receive an optical signal returned by the laser pulse after being reflected by an object and convert the optical signal into an electrical signal. The sampling module 1030 is configured to perform sampling processing on the electrical signal to acquire a sampling result. The operation module 1040 is configured to determine a distance to the object according to the sampling result.

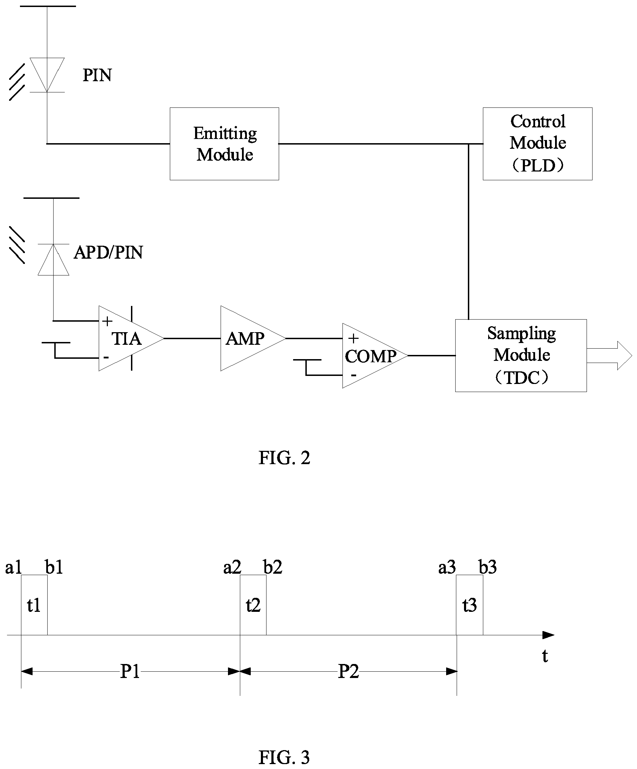

Specifically, FIG. 2 illustrates a structural diagram of a laser ranging apparatus consistent with various disclosed embodiments of the present application. The laser ranging apparatus including an emitting module, a receiving module, a sampling module, an operation module and a control module is taken as an example.

The laser ranging apparatus emits a laser pulse sequence through the emitting module. For example, the emitting module may include an emitting circuit. The emitting circuit includes a PIN photodiode. A laser pulse of a specific wavelength is emitted through the emitting circuit.

The laser pulse is reflected/scattered after encountering an object and then returns an optical signal. The receiving module in the laser ranging apparatus receives the returned optical signal. For example, the receiving module may include a photoelectric conversion circuit, which can convert the returned optical signal into an electrical signal. The receiving module may also include an analog amplifier circuit, such as a trans-impedance amplifier (TIA) and amplifier (AMP), etc. The analog amplifier circuit amplifies and reshapes the electrical signal.

The sampling module in the laser ranging apparatus samples the analog signal output by the receiving module to acquire the sampling result. For example, the sampling module can be implemented based on a time-to-digital converter (TDC) measurement method. Specifically, the sampling module includes a signal comparator and a TDC. The signal comparator may be an analog comparator (COMP), which is configured to convert an analog signal into a digital signal. The TDC calculates and outputs time based on an output result of the signal comparator. For another example, the sampling module can also be implemented based on an analog-to-digital converter (analog-to-digital converter, ADC) measurement method.

The operation module in the laser ranging apparatus determines a distance between the laser ranging apparatus and an object according to the sampling result output by the sampling module. For example, the operation module determines the distance to the object based on the time difference between emission and reception of the laser pulse and speed of light.

The control module in the laser ranging apparatus can be configured to control start and stop of each module in the laser ranging apparatus or each device included in each module.

Optionally, the operation module and control module in the laser ranging apparatus may belong to a digital processing system in the laser ranging apparatus. The digital processing system can be a programmable logic device (PLD) such as Field-Programmable Gate Array (FPGA) or Complex Programmable Logic Device (CPLD), which is not limited herein.

In a single-channel measurement shown in FIG. 3, when performing a specific measurement, an emitting module emits a laser pulse sequence along an emission path. A receiving module can receive the laser pulse sequence of the emission path after the laser pulse sequence reflected by a detected object and perform a photoelectric conversion of the laser pulse sequence to acquire an electrical signal or process the electrical signal. A sampling module can perform sampling processing on the electrical signal. An operation module can calculate a distance between the detected object and the laser ranging apparatus based on the sampling result.

Specifically, in a single-channel laser ranging apparatus, in a working cycle, the emitting module emits a laser pulse sequence (i.e., a laser pulse sequence of the emission path). After the laser pulse sequence is processed by the receiving module, the sampling module and the operation module in turn, a measurement result is finally determined.

In practical applications, in a working cycle, time required from emission of a laser pulse from the emitting module to calculation of a distance by the operation module is t. A specific value of t depends on the distance between the object detected by the laser pulse and the laser ranging apparatus. The farther the distance, the greater the t. When the object is farther from the laser ranging apparatus, the optical signal reflected by the object is weaker. When the reflected optical signal is weak to a certain extent, the laser ranging apparatus cannot detect the optical signal. Therefore, a distance between the object corresponding to a weakest optical signal that can be detected by the laser ranging apparatus and the laser ranging apparatus is called a farthest detection distance of the laser ranging apparatus. For description convenience, the t value corresponding to the farthest detection distance is called t0 hereinafter. In the embodiments of the present invention, the working cycle is greater than t0. In some implementation manners, the working cycle is at least 10 times greater than t0. In some implementation manners, the working cycle is 15 times greater than t0.

For example, as shown in FIG. 3, the emitting module emits a laser pulse sequence at time a1. After the laser pulse sequence is processed by the receiving module, sampling module, and operation module in turn, the computing result is acquired at time b1. A time length between time a1 and time b1 is t1. Then, the emitting module emits a laser pulse sequence again at time a2. After the laser pulse sequence is processed by the receiving module, the sampling module, and the operation module in turn, the calculation result is acquired at the time b2. A time length between the time a2 and the time b2 is t2. Then, the emitting module emits a laser pulse sequence again at time a3. After the laser pulse sequence is processed by the receiving module, sampling module and operation module in turn, the calculation result is acquired at time b3. A time length between time a3 and time b3 is t3. The time lengths of t1, t2, and t3 are respectively less than or equal to the above t0; a2 is later than b1, and similarly, a3 is later than b2. A time length between a1 and a2 is P1. A time length between a2 and a3 is P3. The time lengths P1 and P2 are the above working cycles. P1 and P2 can be set to a same value or different values.

The laser ranging apparatus shown in FIG. 2 is described by taking a single channel as an example. That is, the laser ranging apparatus includes an emitting module for emitting a laser pulse sequence on an emission path. The laser ranging apparatus further includes a receiving module, a sampling module and an operation module, which sequentially process at least part of the optical signal reflected back from the laser pulse sequence emitted by the emission path.

Optionally, the laser ranging apparatus may also be a multi-channel device. Optionally, as another embodiment, the laser ranging apparatus includes a plurality of emitting modules, a plurality of receiving modules, a plurality of sampling modules and a plurality of operation modules. The plurality of emitting modules, the plurality of receiving modules, the plurality of sampling modules, and the plurality of operation modules have one-to-one correspondences , to realize a multi-channel measurement of the laser ranging apparatus. That is, each channel includes an emitting module, a receiving module, a sampling module and an operation module corresponding to the channel.

Specifically, in each channel of the multi-channel, a working sequence of the channel can be referred to as shown in FIG. 3. During a time period between two adjacent laser pulses of the laser ranging apparatus, that is, from after any laser pulse emitted by the laser ranging apparatus to before a next laser pulse, the laser pulse returns an optical signal after being reflected/scattered by an object. Then the optical signal of the emission path is received by a receiving module among the plurality of receiving modules included in the laser ranging apparatus. The receiving module belongs to the channel to which the laser pulse belongs. The receiving module converts the received returned optical signal into an electrical signal. Among the plurality of sampling modules in the laser ranging apparatus, the sampling modules belonging to the channel respectively performs sampling processing on the electrical signal, and outputs a sampling result. The operation modules belonging to the channel among the plurality of operation modules in the laser ranging apparatus respectively determine a distance between the object reflecting the laser pulse and the laser ranging apparatus according to the sampling result.

In one implementation manner, the emitting modules of different channels in the laser ranging apparatus emit laser pulse sequences with different emission paths. Specifically, a plurality of laser pulses may emit laser pulse sequences at different emission angles or emit a plurality of parallel laser pulse sequences at a same emission angle. Optionally, the plurality of emitting modules may emit laser pulses at a same time or at different times. Accordingly, each receiving module of the plurality of receiving modules is configured to receive an optical signal reflected by a probe from the laser pulse emitted by the transmitting module of the channel.

Specifically, time between any two adjacent laser pulse emissions by the laser ranging apparatus is from after any laser pulse emitted by the laser ranging apparatus to before the next laser pulse emitted. The time between any two adjacent emissions can be time between two adjacent emissions of any one emitting module in time; or after one emission of any one emitting module and before the next emission of another emitting module; or two laser pulses of different angles emitted by two emitting modules at a same time. A working sequence between any two adjacent laser pulse emissions by the laser ranging apparatus includes: one emitting module emitting a laser pulse; one of the plurality of receiving modules corresponding to the one emitting module receiving an optical signal returned by the laser pulse after being reflected by an object, and converting the optical signal into an electrical signal; one sampling module corresponding to the one emitting module among the plurality sampling modules in the laser ranging apparatus performing sampling processing on the electrical signal to acquire a sampling result; and according to the sampling result, an operation module corresponding to the one emitting module among the plurality of operation modules determining a distance to the object.

There can be a plurality of relationships between working sequences of different channels.

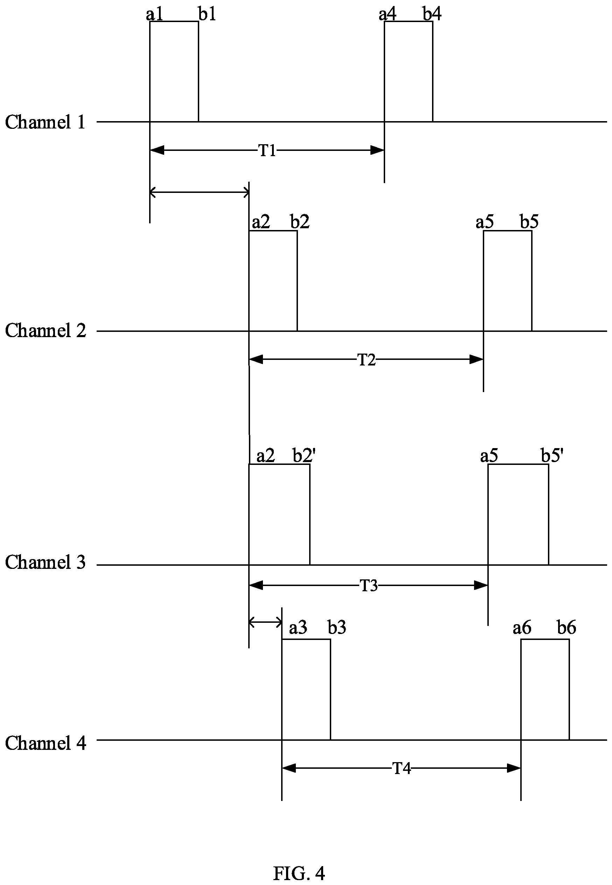

In one implementation manner, each channel in the multi-channel laser ranging apparatus works in sequence. Since each module in the multi-channel laser ranging apparatus is not multiplexed, different channels are independent of each other. For any channel, a time interval between two adjacent laser pulses is a working cycle. The four channels shown in FIG. 4 is taken as an example. After an emitting circuit of a first channel emits a laser pulse sequence, and after a time interval of T1, the emitting circuit of the first channel emits a laser pulse again. The time interval T1 is a working cycle of the first channel. Similarly, a second channel emits a laser pulse at a time intervals of T2, then a working cycle of the second channel is T2. By analogy, a working cycle of a third channel is T3, and a working cycle of a fourth channel is T4. Since there is no multiplexed module between each channel, each channel is relatively independent, T1, T2, T3, and T4 can be set to different values or a same value.

After each channel emits a laser pulse at a distance, an optical signal reflected by a farthest object that can be detected will be processed by a receiving circuit, a sampling circuit and an arithmetic circuit in a next interval T. T is working cycle corresponding to each channel. For one of the channels, a period between start of the laser pulse sequence emitted by the emitting circuit and a moment when the calculation circuit completes the calculation can be called a working period of the channel.

For example, as shown in Fig. 4, an emitting circuit of channel 1 emits a laser pulse sequence at time a1. After the laser pulse sequence is processed by a receiving circuit, a sampling circuit, and an arithmetic circuit of the channel 1, the calculation result is acquired at time b1. A period between time a1 and time b1 is t1, which is a working period. Then, an emitting circuit of channel 2 emits a laser pulse sequence at time a2. After the laser pulse sequence is processed by a receiving circuit, a sampling circuit, and an arithmetic circuit of the channel 2, the calculation result is acquired at time b2. A period between time a2 and time b2 is t2. Then, an emitting circuit of channel 3 emits a laser pulse sequence at time a3. After the laser pulse sequence is processed by a receiving circuit, a sampling circuit, and an arithmetic circuit of the channel 3, the calculation result is acquired at time b3. A period between time a3 and time b3 is t3. Then, an emitting circuit of channel 4 emits a laser pulse sequence at time a4. After the laser pulse sequence is processed by a receiving circuit, a sampling circuit, and an arithmetic circuit of the channel 4, the calculation result is acquired at time b4. A period between time a4 and time b4 is t4. Accordingly, by analogy, times for each channel to emit a laser pulse for a second time are shown in FIG. 4, which will not be repeated herein.

As shown in FIG. 4, start times of working periods of different channels may be different or the same. Or working periods of different channels may partially overlap. Specifically, a2 is later than b1, that is, laser ranging is performed sequentially between channel 1 and channel 2 and working periods do not overlap at all. Channel 2 and channel 3 emit a laser pulse sequence at time a2, that is, start times of working periods of channel 2 and channel 3 are the same. However, due to a difference in measurement distances, or other reasons, lengths of working periods of the channel 2 and the channel 3 may be different. That is, end time b2 of the channel 2 is different from end time b2' of the channel 3. The start time a3 of channel 4 is later than the start time a2 of channel 3 and earlier than the end time b2' of channel 3. Therefore, the start times of the working periods of channel 3 and channel 4 are different, but there is a partial overlap in working periods.

The working periods of different channels can be completely staggered or the start times of the working periods of different channels can be the same, which is no restricted herein.

Four channels included in the multi-channel laser ranging apparatus are taken as an example for description. For any multi-channel laser ranging apparatus, a relationship between working periods of all channels may include one or more of the above relationships between working periods of the four channels, which is not restricted herein.

In some implementation manners, in the multi-channel measurement in the laser ranging apparatus, at least part of the components of the emitting module can be multiplexed in different channels. In all channel to be multiplexed, working periods of all channels must be completely staggered.

Optionally, as an embodiment, in the multi-channel measurement in the laser ranging apparatus, different channels multiplex the entire emitting module. Specifically, the laser ranging apparatus may include an emitting module and a plurality of receiving modules. The emitting module is configured to emit a laser pulse. The laser ranging apparatus may further include an optical path changing module, or an optical path changing element may be included in the emitting module of the laser ranging apparatus. The optical path changing module/component can be configured to divide a laser pulse emitted by the emitting module into at least two laser pulses. The at least two laser pulses and the plurality of receiving modules have one-to-one correspondences. That is, one receiving module is configured to receive the returned optical signal corresponding to one of the laser pulses, to realize a multi-channel application of the laser ranging apparatus.

The laser ranging apparatus including an optical path changing module is taken as an example for description. The optical path changing module divides a laser pulse sent by the emitting module into at least two laser pulses. The at least two laser pulses may include laser pulses with different emission angles and/or laser pulses emitted at different times. Specifically, the optical path changing module can divide the laser pulse sent by the emitting module into at least two laser pulses with different emission angles. For example, the optical path changing module includes polygon mirrors, each of which is on part of the optical path of a laser pulse emitted by the emitting module. Different mirrors reflect part of the light to different directions. The optical path changing module can also divide a laser pulse sent by the emitting module into at least two laser pulses at different times. For example, the optical path changing module includes a galvanometer, which reflects the laser pulse to different directions at different times.

Optionally, as an embodiment, in the multi-channel measurement in the laser ranging apparatus, different channels multiplex part of devices of the emitting module. For example, the emitting module includes a laser diode, a switching device of the laser diode, and a driving device of the switching device. Different channels multiplex the components other than the laser diode in the emitting module. Specifically, the emitting module of each channel includes its own laser diode. The laser diode of each channel is configured to emit a laser pulse sequence. Different channels multiplex the switching devices and/or the driving devices in the emitting module. That is, during a working period of each channel, the multiplexed switching device and/or the driving device drives the laser diode in the channel.

In some implementation manners, in the multi-channel measurement in the laser ranging apparatus, laser pulse sequences are emitted at different times in different channels. Different channels can multiplex at least some devices in the receiving module, the sampling module, and the operation module. That is, at least part of the devices is shared in different channels.

Optionally, as an embodiment, in the multi-channel measurement in the laser ranging apparatus, different channels multiplex the receiving module. Specifically, the receiving module may include a photoelectric converter, which may convert the detected laser pulse sequence into an electrical signal. The photoelectric converter may include a PIN diode or an avalanche photodiode, etc.

The receiving module may also include a signal processing circuit, which can amplify and/or filter signals. The signal processing circuit may include an amplifier circuit, which may amplify an electrical signal by at least one stage. Number of amplification stages can be determined according to devices of the sampling circuit. For example, when the devices of the sampling circuit include an ADC, the amplifier circuit can be sampled and amplified. For another example, when the devices of the sampling circuit include a signal comparator (e.g., it can be an analog comparator (COMP) for converting an electrical signal into a digital signal) and a time-to-digital converter TDC, an amplifier circuit with two or more stages may be sampled for amplification. The first-stage amplifier circuit may include a transimpedance amplifier. The second-stage amplifier circuit may include other types of signal amplifiers. Optionally, the signal amplifier may also include a filter, which can filter electrical signals.

The receiving module may include an amplifier circuit but not a filter or may include a filter circuit but not an amplifier circuit or may include a filter and an amplifier circuit.

In the multi-channel measurement, the multiplexed receiving module may include a plurality of photoelectric converters. Each photoelectric converter is configured to receive a laser pulse sequence and convert the received laser pulse sequence into an electrical signal. The plurality of photoelectric converters may work in time sharing. That is, different laser pulse sequences in a plurality of laser pulse sequences arrive at the photoelectric converters at different times.

Optionally, at least two of a plurality of electrical signals can be multiplexed with at least one device of the receiving module except the photoelectric converter. For example, at least two electrical signals can be multiplexed with at least one device included in the signal processing circuit for realizing amplification and/or filtering.

In one implementation manner, the receiving module includes at least two transimpedance amplifiers. Each of the at least two transimpedance amplifiers respectively amplifies each of the at least two electrical signals. The at least two transimpedance amplifiers are connected to next-stage devices of the transimpedance amplifiers in a time-sharing manner through signal gating, or through a switch, or through a multiplexer.

Optionally, in one embodiment of the present application, in the receiving module, the at least two electrical signals are multiplexed with at least one device of the receiving module except the photoelectric converters and at least one device other than at least continuous downstream one-stage devices of the photoelectric converters. The at least continuous downstream one-stage devices include next-stage devices of the photoelectric converter. That is, in a multiplexing of the devices of the receiving module, a plurality of electrical signals can be multiplexed in a way that the plurality of electrical signals (i.e., corresponding to different devices) is first split and then multiplexed.

For example, in the receiving module including an APD, a transimpedance amplifier, a signal amplifying circuit and a filter, the signal amplifying circuit and the filter can be multiplexed without multiplexing the transimpedance amplifier. Alternatively, the filter can be multiplexed without multiplexing the transimpedance amplifier and the signal amplifying circuit.

In a time period between two adjacent laser pulses of the emitting module in the laser ranging apparatus, that is, from after any laser pulse emitted by the emitting module to before the next laser pulse, each laser pulse returns at least part of the optical signals after being reflected/scattered by an object. The receiving module included in the laser ranging apparatus receives the at least one returned optical signal. For example, the receiving module receives the at least one optical signal in a time-sharing manner and converts the received returned optical signals into electrical signals, and then outputs at least one electrical signal correspondingly. The sampling module in the laser ranging apparatus performs sampling processing on the at least one electrical signal, respectively. The operation module in the laser ranging apparatus determines a distance to an object according to the sampling result output by the sampling module.

Optionally, in one embodiment, in the multi-channel measurement in the laser ranging apparatus, different channels multiplex the sampling module and/or the operation module.

For example, different channels of the laser ranging apparatus multiplex the sampling module and the operation module. Different channels in the laser ranging apparatus share a sampling module and an operation module. Specifically, the receiving modules in the different channels are respectively connected to a same sampling module, and the sampling module is connected to an operation module. The emitting module in any channel emits a laser pulse. After the receiving module of the channel receives an optical signal reflected by an object and outputs a processed electrical signal, the sampling modules perform sampling processing on the electrical signal in the channel, and then outputs the sampling result to the operation module.

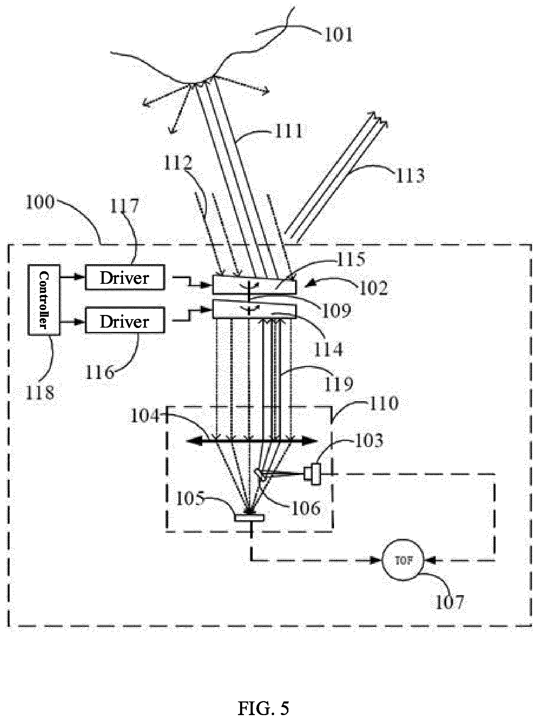

In the following, any laser ranging apparatus is taken as an example to specifically describe a working principle of the laser ranging apparatus, especially a working principle of the multi-channel laser ranging apparatus. A coaxial optical path can be used in the laser ranging apparatus, that is, a light beam emitted from the laser ranging apparatus and a reflected light beam share at least part of the optical path in the laser ranging apparatus. Alternatively, the laser ranging apparatus can also adopt an off-axis optical path. That is, the light beam emitted by the laser ranging apparatus and the reflected light beam are emitted along different optical paths in the laser ranging apparatus. Fig. 5 illustrates a schematic diagram of a laser ranging apparatus consistent with various embodiments of the present application.

A laser ranging apparatus 100 includes an optical transceiver 110. The optical transceiver 110 includes a light source 103, a collimating element 104, a detector 105 and an optical path changing element 106. The optical transceiver 110 is configured to emit a light beam, receive returned light, and convert the returned light into electrical signals. The light source 103 is configured to emit a light beam. The light source 103 may belong to the above emitting module. In one embodiment, the light source 103 may emit a laser beam. The light source includes a laser diode package module for emitting a laser pulse at a certain angle with a first surface of a substrate of the laser diode package module. The angle is less than or equal to 90 degree. Optionally, the laser beam emitted by the light source 103 is a narrow-bandwidth beam with a wavelength outside a visible light range. The collimating element 104 is arranged on an exit light path of the light source and is configured to collimate the light beam emitted from the light source 103 into parallel light. The collimating element is also configured to condense at least part of the returned light reflected by a probe. The collimating element 104 can be a collimating lens or other elements capable of collimating a light beam.

The laser ranging apparatus 100 further includes a scanning module 102. The scanning module 102 is placed on an exit light path of the optical transceiver 110. The scanning module 102 is configured to change an emission direction of a collimated light beam 119 emitted by the collimating element 104 and project it to an external environment, and project the returned light to the collimating element 104. The returned light is collected on the detector 105 via the collimating element 104.

In one embodiment, the scanning module 102 may include one or more optical elements such as a lens, a mirror, a prism, a grating, an optical phased array, or any combination of the above optical elements. In some embodiments, a plurality of optical elements of the scanning module 102 can be rotated around a common axis 109. Each rotating optical element is configured to continuously change propagation directions of the incident light beam. In one embodiment, the plurality of optical elements of the scanning module 102 may rotate at different rotational speeds. In another embodiment, the plurality of optical elements of the scanning module 102 may rotate at substantially a same rotational speed.

In some embodiments, the plurality of optical elements of the scanning module may also rotate around different axes, or vibrate in a same direction, or vibrate in different directions, which is not limited herein.

In one embodiment, the scanning module 102 includes a first optical element 114 and a driver 116 connected to the first optical element 114. The driver 116 is configured to drive the first optical element 114 to rotate around the rotation axis 109 so that the first optical element 114 changes a direction of the collimated beam 119. The first optical element 114 projects the collimated light beam 119 to different directions. In one embodiment, an angle between the direction of the collimated beam 119 changed by the first optical element and the rotation axis 109 changes as the first optical element 114 rotates. In one embodiment, the first optical element 114 includes a pair of opposed non-parallel surfaces through which the collimated light beam 119 passes. In one embodiment, the first optical element 114 includes a prism whose thickness varies in at least one radial direction. In one embodiment, the first optical element 114 includes a wedge prism to collimate the beam 119 for refracting. In one embodiment, the first optical element 114 is coated with an anti-reflection coating. The thickness of the anti-reflection coating is equal to the wavelength of the light beam emitted by the light source 103, thereby increasing intensity of the emitted light beam.

In one embodiment, the scanning module 102 further includes a second optical element 115. The second optical element 115 rotates around the rotation axis 109. The rotational speed of the second optical element 115 is different from the rotational speed of the first optical element 114. The second optical element 115 is configured to change a direction of a light beam projected by the first optical element 114. In one embodiment, the second optical element 115 is connected to another driver 117. The driver 117 drives the second optical element 115 to rotate. The first optical element 114 and the second optical element 115 can be driven by different drivers, so that rotational speeds of the first optical element 114 and the second optical element 115 are different, thereby projecting the collimated beam 119 to different directions in an outer space to allow scanning a larger space. In one embodiment, a controller 118 controls the drivers 116 and 117 to drive the first optical element 114 and the second optical element 115 respectively. The rotational speeds of the first optical element 114 and the second optical element 115 can be determined according to an area and a pattern expected to be scanned in actual applications. The drivers 116 and 117 may include motors or other driving devices.

In one embodiment, the second optical element 115 includes a pair of opposite non-parallel surfaces through which a light beam pass. In one embodiment, the second optical element 115 includes a prism whose thickness varies in at least one radial direction. In one embodiment, the second optical element 115 includes a wedge prism. In one embodiment, the second optical element 115 is coated with an anti-reflection coating to increase intensity of the emitted light beam.

A rotation of the scanning module 102 can project light to different directions, such as directions 111 and 113, scan a space around the laser ranging apparatus 100. When light 111 projected by the scanning module 102 hits a probe 101, part of the light is reflected by the probe 101 to the laser ranging apparatus 100 in a direction opposite to the projected light 111. The scanning module 102 receives the returned light 112 reflected by the probe 101 and projects the returned light 112 to the collimating element 104.

The collimating element 104 converges at least a part of the returned light 112 reflected by the probe 101. In one embodiment, an anti-reflection coating is plated on the collimating element 104 to increase the intensity of the emitted light beam. The detector 105 and the light source 103 are placed on the same side of the collimating element 104, and the detector 105 is configured to convert at least part of the returned light passing through the collimating element 104 into an electrical signal.

In some embodiments, the light source 103 may include a laser diode, through which nanosecond laser light is emitted. For example, the laser pulse emitted by the light source 103 lasts for 10 ns. Further, the laser pulse receiving time can be determined. For example, the laser pulse receiving time is determined by detecting the rising edge time and/or the falling edge time of the electrical signal pulse. Therefore, the laser ranging apparatus 100 can calculate the TOF by using the pulse receiving time information and the pulse emitting time information, to determine a distance between the probe 101 and the laser ranging apparatus 100.

Distance and orientation detected by the laser ranging apparatus 100 can be used for remote sensing, obstacle avoidance, surveying and mapping, modeling, navigation, and the like.

In order to ensure performance of the laser ranging apparatus, a bandwidth requirement of analog circuit parts of the laser ranging apparatus is relatively high. For example, photoelectric conversion circuits and analog amplifier circuits are generally tens of MHz to hundreds of MHz In order to meet such high bandwidth requirements, a quiescent current of an analog chip selected in an analog circuit is usually relatively large about tens of mA, which generates hundreds of mW of quiescent power consumption and increases temperature of the analog chip. At a same time, working clock frequency of a digital circuit that realize high-precision measurement (such as the above sampling module and operation module) is generally relatively high. The digital circuit continues to flip with a system clock, which brings a lot of power consumption and also increases temperature of the digital chip.

The analog circuit and the digital circuit in the laser ranging apparatus are always in working condition, which brings a considerable power consumption. The power consumption causes large temperature rise of the laser ranging apparatus, and the normal working temperature range of the analog chip and the digital chip are determined. Temperature rise will reduce a temperature range of an entire system. Especially in multi-channel applications, multi-channel analog and digital chips will increase power consumption by multiples and system temperature will increase sharply. Moreover, in many implementation manners of the laser ranging apparatus provided by the embodiments of the present application, working period of components in each channel of a single channel or multiple channels in a working cycle only accounts for a small proportion of the working cycle. If the components are always in working condition, it will cause a lot of unnecessary power waste.

Therefore, one embodiment of the present application proposes a method 1000 for laser ranging, which can reduce power consumption of the laser ranging apparatus.

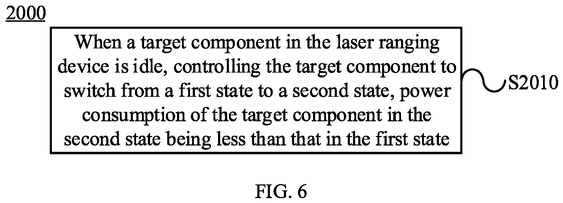

FIG. 6 illustrates a schematic flowchart of a laser ranging method 2000 consistent with various embodiments of the present application. As shown in FIG. 6, the method 2000 includes S2010. When a target component in the laser ranging apparatus is idle, the target component is controlled to switch from a first state to a second state. Power consumption of the target component in the second state is less than that in the first state. The target component may be at least one device in at least one module included in the laser ranging apparatus. That is, the target component may be any one or more devices in the laser ranging apparatus. The laser ranging apparatus may include at least one emitting module, at least one receiving module, at least one sampling module and at least one operation module. Optionally, the laser ranging apparatus may further include one or more other modules.

The method 2000 can be applied to a laser ranging apparatus. For example, the method 2000 can be applied to any laser ranging apparatus as shown in FIGS. 1-5.

Specifically, in the method 2000, if the target component in the laser ranging apparatus is idle, the target component is controlled to switch from the first state to the second state. The target component is at least one device in at least one module included in the laser ranging apparatus. Power consumption of the target component in the second state is less than that in the first state. Accordingly, the method 2000 may further include: controlling the target component to switch from the second state to the first state.

Specifically, when the target component is at least one device of analog circuit parts included in the laser ranging apparatus, e.g., when the target component is at least one of at least one emitting module and at least one receiving module, controlling the target component to switch from the first state to the second state includes: reducing a static circuit of the target component so that a quiescent current of the target component in the second state is lower than that in the first state. That is, the target component enters a low power consumption state. Accordingly, controlling the target component to switch from the second state to the first state includes: adding a static circuit of the target component to restore the target component to the quiescent current in the first state so that the target component can start normal operation.

When the target component is at least one device of digital circuit parts included in the laser ranging apparatus, e.g., when the target component is at least one device of at least one sampling module and at least one operation module, controlling the target component to switch from the first state to the second state includes: reducing flip frequency of the target component so that flip frequency of the target component in the second state is lower than that in the first state. That is, the target component enters a low-power state and operating frequency is reduced. Accordingly, controlling the target component to switch from the second state to the first state includes: increasing flip frequency of the target component to restore the target component to flip frequency in the first state, so that target component can start to work normally and the operating frequency returns to normal.

Optionally, controlling the target component to switch from the first state to the second state may further include: disconnecting the target component from a power supply so that the target component enters a sleep state. For example, the target component may be at least one of at least one emitting module and at least one receiving module. When the target component does not need to work, the target component is powered off to reduce power consumption. Accordingly, controlling the target component to switch from the second state to the first state includes: connecting the target component to the power supply, supply power to the target component, and make the target component enter a normal working state.

The first state of the target component in the laser ranging apparatus refers to the state in which the target component can work normally, and the target component in the first state does not lose any measurement accuracy. Accordingly, when the target component is in the second state, power consumption of the target component is reduced compared to the first state, and the target component cannot work normally, for example, the target component may not work, or work efficiency is low.

For example, the target component includes at least one device in the emitting module. When the target component is in the first state, it can emit laser a pulse normally. Specifically, the target component in the first state may be emitting a laser pulse or waiting to emit a laser pulse. If the target component is in the state of waiting to emit a laser pulse, then the target component is in an idle state. Accordingly, when the target component is in the second state, the target component reduces the quiescent current, thereby reducing power consumption. In the second state, the target component cannot emit laser pulses normally.

For another example, the target component includes at least one device in the sampling module. When the target component is in the first state, it can normally perform sampling processing on the electrical signal, and the sampling frequency is relatively high. Specifically, the target component in the first state may be sampling or waiting for sampling. If the target component is waiting for sampling, then the target component is in the idle state. Accordingly, when the target component is in the second state, flip frequency of the target component is reduced, thereby reducing power consumption. In the second state, the target component cannot perform sampling processing at a frequency in the first state. For example, the target component may not be able to sample in the second state or use a lower sampling frequency for sampling.

In the embodiments of the present application, various conditions can be configured to determine the moment when the target component switches from the first state to the second state. In a single-channel laser ranging apparatus, a period between two adjacent laser pulse emissions by the emitting module is called a working cycle T, i.e., a period after the emitting module emits one laser pulse to before one next laser pulse is emitted.

In the following, a working cycle T in the above-mentioned single-channel laser ranging apparatus is taken as an example to illustrate the moment when the target component switches from the first state to the second state.

In a single-channel laser ranging apparatus, within the working cycle T, an emitting module emits a laser pulse, which is processed by the receiving module, sampling module and operation module in turn, and finally determines a measurement result until the emitting module emits a laser pulse again. In practical applications, in the working cycle T, time required from the emitting module emitting a laser pulse to the operation module calculating a distance is t. A distance between the object corresponding to the weakest optical signal that can be detected by the laser ranging apparatus and the laser ranging apparatus is called a farthest detection distance of the laser ranging apparatus. For description convenience, the t value corresponding to the farthest detection distance is called t0 hereinafter.

In an implementation manner, it is assumed that the target component includes at least one device in each of the emitting module, the receiving module, the sampling module, and the operation module in the single-channel laser ranging apparatus. In a working cycle, when it is detected that any one device in the target component in the laser ranging apparatus has completed a work, the device can be controlled to switch from the first state to the second state. That is, for a plurality of devices in the target component, according to an order of completion of the work, each device is sequentially controlled to switch from the first state to the second state. Alternatively, when all modules in the laser ranging apparatus have completed the work, all devices in the target component are simultaneously controlled to switch from the first state to the second state.

For example, for a single-channel laser ranging apparatus, in a working cycle, a working sequence of the modules included in the laser ranging apparatus is from front to back: emitting module, receiving module, sampling module and operation module. In one embodiment, the target component includes all devices in the four modules. When any device in any one of the four modules completes a work in the current working cycle, it can switch from the first state to the second state. That is, according to the order of the transmitting module, receiving module, sampling module and computing module, each module is sequentially controlled to enter the second state.

In other words, after the emitting module completes an emission of the laser pulse, the devices in the emitting module can switch from the first state to the second state. Similarly, after the receiving module receives a corresponding returned optical signal and completes the optical signal conversion to an electrical signal, the receiving module completes its work, and the devices in the receiving module can switch from the first state to the second state. The sampling module performs sampling processing on the electrical signal output by the receiving module to finishes working after acquiring a sampling result. The devices in the sampling module can switch from the first state to the second state. The operation module determines a distance to the object according to the sampling result and completes the work. The devices in the operation module can switch from the first state to the second state.

Alternatively, the four modules can also switch from the first state to the second state at a same time after the four modules have completed the work, i.e., after the last operation module has completed the work, to wait for a next working cycle.

That is, after the emitting module completes an emission of a laser pulse, the receiving module receives a corresponding returned optical signal and completes an optical signal conversion to an electrical signal. The sampling module perform sampling process on the electrical signal output by the receiving module to acquire a sampling result. The operation module determines a distance to an object according to the sampling result. The four modules have completed the work. then the devices in the four modules can switch from the first state to the second state.

In an implementation manner, the target component includes at least one device in each of the emitting module, the receiving module, the sampling module, and the operation module in the single-channel laser ranging apparatus. In a working cycle, when a third preset period is reached after the laser pulse is emitted from the emitting module, the devices in the receiving module, the sampling module and the operation module are controlled to switch from the first state to the second state at a same time. The third preset period is not less than t0.

In an implementation manner, the target component includes at least one device in each of the emitting module, the receiving module, the sampling module, and the operation module in the single-channel laser ranging apparatus. In a working cycle, when the third preset period is reached after a laser pulse is emitted from the emitting module, the devices in the receiving module, the sampling module and the operation module are controlled to switch sequentially from the first state to the second state. The time interval at which the receiving module, the sampling module and the operation module respectively enter the second state is preset.

For example, after the emitting module completes an emission of a laser pulse, after the third preset period has elapsed, the receiving module consistently does not receive a returned optical signal, indicating that a distance measurement exceeds the maximum. Then devices in the four modules are controlled to switch from the first state to the second state sequentially or simultaneously. The third preset period can be set to be equal to a working period t0 corresponding to a maximum measurement distance.

In the following, a multi-channel laser ranging apparatus is taken as an example to illustrate a moment when the target component switches from the first state to the second state.

First case: the multi-channel laser ranging apparatus does not multiplex the devices in circuits.

Without multiplexing, a working mode of each channel can be the same as that of the single-channel laser ranging apparatus described above. A plurality of channels can be independent of each other.

In one implementation manner, time point at which the emitting modules of each channel respectively emit a laser pulse sequence is the same, that is, there are a plurality of channels simultaneously emit the laser pulse sequence. For example, the plurality of channels can simultaneously emit laser pulse sequences in different directions. In the implementation manner, optionally, the control module can simultaneously control devices of same type in each channel to simultaneously switch from the first state to the second state after the third preset period from the laser pulse emission. Alternatively, the control module may also control the devices of same type in each channel to simultaneously switch from the first state to the second state after the third preset period from the laser pulse emission. Optionally, the control module can also independently control devices in each channel to enter the second state.

In one implementation manner, the channels can also work in sequence. A time interval between two adjacent laser pulses is called an emission period. Three channels are taken as an example. After the emitting module of the first channel emits a laser pulse, the emitting module of the second channel emits a laser pulse after a time interval of T1. After a time interval of T2, the emitting module of the third channel emits a laser pulse. After a time interval of T3, the emitting module of the first channel emits laser a pulse. After each channel emits a laser pulse, an optical signal reflected by a farthest object that can be detected will be processed by the receiving module, the sampling module and the operation module in the next interval T1, T2 or T3. T1, T2 and T3 can be the same or different. For example, the time interval T1, T2 or T3 can be set correspondingly according to processing time of the optical signal reflected by the farthest object that can be detected by each channel

In the above two implementation manners, each channel is independent of each other and does not affect each other. It is assumed that the target component includes at least one device in each of the emitting module, the receiving module, the sampling module, and the operation module of any channel in the laser ranging apparatus. For any channel, in a working cycle, moments when each device switches from the first state to the second state may include: a moment when it is detected that any module in the channel has completed the work, controlling the device in the module to switch from the first state to the second state , wherein the channel includes an emitting module, a receiving module, a sampling module, and an operation module, the four modules finishes working and correspondingly enter the second state in turn; or, a moment when it is detected that all modules in the channel have completed the work, controlling all modules to enter the second state at a same time; or, a moment when a laser pulse emitted from the emitting module of the channel reaches the third preset period, controlling the emitting module, the receiving module, the sampling module, and the operation module in the channel to switch from the first state to the second state at a same time, or switch from the first state to the second state in turn, wherein time intervals for each device in the target component to enter the second state are preset.

Second case: the multi-channel laser ranging apparatus multiplexes at least part of devices in circuits.

In a case of multiplexing, the emitting modules of each channel sequentially emit laser pulse sequences. A working cycle of any channel includes: the emitting module corresponding to the channel emitting a laser pulse sequence, the receiving module in the channel receiving a returned optical signal, and the sampling module and the operation module processing the returned optical signal and outputting a result.

For any channel, it is assumed that the target component includes at least one device in each of the emitting module, the receiving module, the sampling module, and the operation module corresponding to the channel. The target component may include some or all of the devices included in the emitting module, receiving module, sampling module, and operation module in the channel. That is, the target component may include multiplexed and non-multiplexed devices. Moments when the control target component switches from the first state to the second state includes: a moment when it is detected that any module in the channel has completed its work, controlling the device in the module to enter the second state, that is, devices included in the emitting module, the receiving module, the sampling module and the operation module of the target component, according to a working order, sequentially switching from the first state to the second state; or, a moment when all devices in the target component finishes working, controlling a moment when all target components switch from the first state to the second state at a same time; or, a moment when the third preset period is reached after a laser pulse is emitted from the emitting module of the channel, controlling all target components to switch from the first state to the second state at the same time, or controlling each device in the target component to switch from the first state to the second state in turn, wherein time intervals for each target component to enter the second state are preset.

The above describes various situations in which the target component switches from the first state to the second state from a perspective of the single-channel or multi-channel laser ranging apparatus. The following describes how the target component switches from the first state to the second state from a perspective of a way that the target component enters the second state.

Optionally, as an embodiment, if the target component has at least two devices in the laser ranging apparatus, controlling the target component to switch from the first state to the second state may include: in a working cycle, sequentially controlling each of the at least two devices to switch from the first state to the second state, that is, at least two of the at least two devices entering the second state at different times.

Optionally, sequentially controlling each of the at least two devices from the first state to the second state may include: when a first device completes the work, controlling the first device to switch from the first state to the second state. The first device may be any one of the at least two devices, that is, whether the first device enters the second state depends on whether the first device completes the work. Specifically, the target component including devices in each of the emitting module, the receiving module, the sampling module and the operation module in the laser ranging apparatus is taken as an example for description. For any device in the target component, such as the first device, when the first device completes the work, the first device is controlled to switch from the first state to the second state.

For example, the first device is a device in the emitting module. In a working cycle, after the emitting module emits a laser pulse, a work for the emitting module is completed. After the first device emits a laser pulse, the first device is controlled to enter the second state. Power consumption of the first device is reduced. For example, a quiescent current of the first device can be reduced, or the first device can be disconnected from the power supply.

Optionally, sequentially controlling each of the at least two devices to switch from the first state to the second state may further include: after a third preset period after the emitting module emits a laser pulse, controlling a second of the at least two devices to switch from the first state to the second state, wherein the second device may be any one of the at least two devices except the emitting module. That is, whether the second device enters the second state is determined according to the third preset period. The third preset period is related to a maximum measurement distance of the laser ranging apparatus. Specifically, the target component including the devices in each of the emitting module, the receiving module, the sampling module and the operation module in the laser ranging apparatus is taken as an example for description. In a working cycle, after the third preset period after a moment that the emitting module emits a laser pulse, if there is still no return optical signal, it is considered that the laser pulse exceeds the maximum measurement distance. Devices in the receiving module, the sampling module and the operation module are controlled to enter the second state.

For example, for a device in the emitting module, in a working cycle, after the emitting module emits a laser pulse, a work for the emitting module is completed. Then after the emitting module emits a laser pulse, devices in the emitting module are controlled to enter the second state. Power consumption is reduced. For example, a quiescent current of the device can be reduced, or the device can be disconnected from the power supply.

When a second device belongs to a different module, the third preset period may be different. For example, when the second device belongs to the sampling module, the third preset period corresponds to a maximum time that the sampling module needs to wait from the emitting module emitting a laser pulse to the sampling module performing sampling processing when the laser ranging apparatus measures a maximum distance. When the second device belongs to the operation module, the third preset period corresponds to a maximum time that the operation module needs to wait from the emitting module emitting a laser pulse to the operation module performing a calculation when the laser ranging apparatus measures a maximum distance.

Alternatively, when the second device belongs to a different module, the third preset period may also be the same. For example, the third preset period can be set as a waiting time corresponding to a module with a longest waiting time among all the modules when a measured distance in the laser ranging apparatus is the largest. For example, in a working cycle of a laser ranging apparatus, the operation module used in a last step has a longest waiting time. Then, a maximum period that the operation module needs to wait is determined as the third preset period from the emitting module emitting a laser pulse to the operation module performing a calculation.

Optionally, as an embodiment, if the target component has at least two devices in the laser ranging apparatus, controlling the target component to switch from the first state to the second state may include: between two adjacent laser pulse emissions by the emitting module of the laser ranging apparatus, controlling at least two devices to switch from the first state to the second state at a same time.

Optionally, simultaneously controlling at least two devices to switch from the first state to the second state may include: when the at least two devices all finishes working, controlling all the at least two devices to switch from the first state to the second state. That is, whether all devices enter the second state is based on whether all devices have completed the work. Specifically, the target component including devices in each of the emitting module, the receiving module, the sampling module and the operation module in the laser ranging apparatus is taken as an example for description. When all the target components have completed the work, all devices in the target component are controlled to switch from the first state to the second state.

For example, in a working cycle, the emitting module first emits a laser pulse, that is, the emitting module ends its work. Then the receiving module receives a return signal, the sampling module performs sampling processing, and the operation module determines a distance to an object. After the emitting module, the receiving module, the sampling module and the operation module all finish the work, the target component is controlled to enter the second state at a same time, thereby reducing power consumption of the target component. The target component includes devices in each module of the emitting module, the receiving module, the sampling module, and the operation module. For example, for a device in the emitting module, a quiescent current of the device can be reduced, or the device can be disconnected from a power supply. For another example, for a device in the sampling module, flip frequency of the device can be reduced, or the device can be disconnected from a power supply.

Optionally, controlling at least two devices to switch from the first state to the second state at the same time may further include: after a fourth preset period after the emitting module emits a laser pulse, controlling the at least two devices to switch from the first state to the second state at a same time. That is, whether the at least two devices enter the second state is determined according to the fourth preset period. The fourth preset period is related to a maximum measurement distance of the laser ranging apparatus. Specifically, the target component including devices in each of the emitting module, the receiving module, the sampling module and the operation module in the laser ranging apparatus is taken as an example for description. In a working cycle, after the fourth preset period after the emitting module emits a laser pulse, if there is still no return optical signal, it is considered that the laser pulse has exceeded a maximum measurement distance. Devices in the emitting module, receiving module, sampling module and operation module to are controlled to enter the second state.

For example, for a device in an emitting module, in a working cycle, after the emitting module emits a laser pulse, a work for the emitting module is completed. Since there may be an optical path change module, the laser pulse is changed from one path to a plurality of paths. Therefore, in the working cycle, after the fourth preset period, the receiving module may receive part of returned optical signals of laser pulses. But there are still some laser pulses that do not return optical signals. The fourth preset period corresponds to a maximum period required for the return optical signal when the laser ranging apparatus measures a maximum distance, that is, a maximum period that the receiving module needs to wait after the emitting module emits a laser pulse. Since the fourth preset period is exceeded, the part of the laser pulses that do not return optical signals can be considered to have exceeded the maximum measurement distance. That is, the part of the laser pulse can be considered to have completed the work. When the corresponding receiving module, the corresponding sampling module, and the corresponding operation module have processed the returned optical signals and have exceeded the fourth preset period, it is considered that all modules have completed the work in the working cycle. All devices in the target component can be controlled to enter the second state, thereby reducing power consumption. For example, for a device in the emitting module, a quiescent current of the device can be reduced, or the device can be disconnected from a power supply. Or, for a device in the sampling module, flip frequency of the device can be reduced, or the device can be disconnected from a power supply,

For another example, a laser ranging apparatus with a measuring frequency of 10 kHz and a measuring distance of 450 m is taken as an example. The laser ranging apparatus measures once every 100 µs. The emitting module emits laser a pulse. A time difference from emission to reception is only 3 µs. During a period of more than 90 µs, each module is in an idle state. There is no need to emit and receive the laser pulse, and no need to sample. Therefore, 33 µs after the laser pulse is emitted from the emitting module, if there is still no return optical signal, it is considered that a maximum measurement distance of the laser ranging apparatus has been exceeded. Then, the target component in the laser ranging apparatus is controlled to enter the second state, so that part of the target component is in a low power consumption state during a time exceeding 90 µs, which greatly reduces power consumption of the laser ranging apparatus.

The method 2000 may further include: after the target component enters the second state, accordingly, controlling the target component to switch from the second state to the first state. Optionally, before the target component starts working, the target component switches from the second state to the first state. Or, before the emitting module in the laser ranging apparatus starts to work, all devices in the target component can switch from the second state to the first state for work.

Optionally, as an embodiment, the target component may switch from the second state to the first state before the emitting module starts working. For example, considering that it may take a period to switch from the second state to the first state, the target component may switch from the second state to the first state prior to the second preset period before the emitting module starts emitting a laser pulse. Specifically, all devices in the target component are currently in the second state. If at a first moment, the emitting module should emit a laser pulse, then at a second moment before the first moment, all devices in the target component switch from the second state to the first state. A difference between the first moment and the second moment is greater than or equal to the second preset period, so that each device in the target component has enough time to enter the first state. The target component in the first state can start to work at any time. For example, the emitting module after entering the first state can emit a laser pulse when the emitting module needs to emit a laser pulse. For another example, after the operation module enters the first state, a normal operation frequency is restored.

For example, for a single-channel laser ranging apparatus, in a working cycle, assuming that the target component includes at least one device in each of the four modules, from first to last, a working sequence of the modules included in the laser ranging apparatus is: the emitting module, the receiving module, the sampling module and the operation module. If the four modules are in the second state, at the first moment, devices belonging to the emitting module in the target component needs to emit a laser pulse at the first moment. Then, at the second time before the first moment, all devices in the target component switch from the first state to the second state. A difference between the first moment and the second moment is greater than or equal to the second preset period, so that each device in the target component has enough time to enter the first state, and the target component in the first state can start working at any time.

For another example, for a multi-channel laser ranging apparatus, the multi-channel laser ranging apparatus includes a case of multiplexing any device of the emitting module, the receiving module, the sampling module and the operation module, or may also include a case of not multiplexing all the four modules. Similarly, it is assumed that the target component includes at least one device in each of the four modules, wherein the target component may include one or more devices that are multiplexed and not multiplexed. All devices in the target components are in the second state. At the first moment, for any channel, a device belonging to the emitting module in the target component needs to emit a laser pulse at the first moment. Then, at the second time before the first time, all the devices in the target component corresponding to the channel switch from the second state to the first state. The difference between the first moment and the second moment is greater than or equal to the second preset period, so that each device belonging to the channel in the target component has enough time to enter the first state, and the target component in the first state can start working at any time.

Taking FIG. 4 as an example, for a multi-channel laser ranging apparatus, it is assumed that the modules in the multi-channel laser ranging apparatus are not multiplexed. For channel 1, it is assumed that the emitting module can enter the second state after b 1. Since the emitting module needs to emit laser pulses again at time a4, before time a4 and at a moment of the second preset period from time a4, each device in the emitting module, the receiving module, the sampling module, and the operation module in channel 1 is controlled to switch from the second state to the first state, so that each device in the target component belonging to the channel has enough time to enter the first state, and the target component in the first state can start working at any time.

Optionally, as an embodiment, the target component may switch from the first state to the second state before the target component starts working. For example, considering that the target component may take a period to switch from the first state to the second state, the target component may switch from the first state to the second state prior to the first preset period before the target component starts working. Specifically, since each circuit in the laser ranging apparatus does not need to work at a same time, according to a signal and a data flow direction, each circuit can start working in a certain sequence. For example, devices in the target component can sequentially start working according to the emitting module, the receiving module, the sampling module and the operation module.

For any target component, the target component is currently in the second state. If at the first moment, the emitting module should emit a laser pulse, then within the working cycle to which the laser pulse belongs, times when each module starts to work can be determined accordingly. According to the times it may take for each module to switch from the second state to the first state, before the first preset period prior to that the one target component starts working, the target component switch from the second state to the first state, so that the target component has enough time to enter the first state.

For example, for a device in an emitting module, time required for the emitting module to enter the first state may be long. For a device in the sampling module, the time required to enter the first state may be short. Before the first preset period when the emitting module starts to emit a laser pulse, the device in the emitting module switches from the second state to the first state. The first preset period corresponds to the emitting module. Before the first preset period when the sampling module starts sampling, the devices in the sampling module switch from the second state to the first state. The first preset period corresponds to the sampling module. The first preset period corresponding to the emitting module is greater than the first preset period corresponding to the sampling module.

Specifically, taking a single-channel laser ranging apparatus as an example, within a working cycle, a working sequence of the modules in the single-channel laser ranging apparatus is the emitting module, the receiving module, the sampling module, and the operation module in sequence. It is assumed that the target component includes at least one device in each of the four modules, and the target component is currently in the second state. If at the first moment, the emitting module should emit a laser pulse, then within a working cycle to which the laser pulse belongs, time when each module starts working can be determined accordingly. According to time it may take for each module to switch from the second state to the first state, prior to the first preset period before any device in the target component starts working, the target component switch from the second state to the first state, so that the target component has enough time to enter the first state and start working.

For example, in the working cycle, devices belonging to the emitting module in the target component first enter the first state to start emitting a laser pulse. That is, devices in the emitting module are first controlled to switch from the first state to the second state. In the target components, devices belonging to the receiving module, the sampling module, and the operation module switch from the second state to the first state at a preset time before starting to work in accordance with the respective working sequences.

Similarly, for a multi-channel laser ranging apparatus, the multi-channel laser ranging apparatus includes a case of multiplexing any of the emitting module, the receiving module, the sampling module and the operation module, or may also include a case of not multiplexing all the four modules. Similarly, it is assumed that the target component includes at least one device in each of the four modules and may include one or more devices that are multiplexed and not multiplexed. All devices in the target component are in the second state. At the first moment, for any channel, the devices belonging to the emitting module in that channel in the target component, needs to emit a laser pulse at the first moment. Then, within the working cycle to which the laser pulse belongs, time when each module starts working can be determined accordingly. According to time it may take for each module to switch from the second state to the first state, prior to the first preset period before any target component starts working, any device in the target component switches from the second state to the first state, so that the target components have enough time to enter the first state and start working.

For example, for any channel, in any working cycle, devices in the emitting module belonging to the channel in the target component first needs to enter the first state to start emitting a laser pulse. That is, the devices in the emitting module are first controlled to switch from the second state to the first state. In the target component, devices belonging to the receiving module, the sampling module, and the operation module switch from the second state to the first state to the first state in a preset period before starting to work in accordance with respective working sequences.

Therefore, in the laser ranging method of embodiments of the present application, when the target components in the modules included in the laser ranging apparatus are idle, the target component is controlled to switch from the first state to the second state. Considering that each device in the laser ranging apparatus does not need to work all the time, nor need to work at a same time, each device may be controlled to enter the first state in a certain sequence or at a same time so as to start working at any time or each device may be controlled to enter the second state and stop working. For example, an order can be determined according to a signal and a data flow direction. The above control switching in different states not only ensures measurement performance of a system, but also minimizes working time of each device and further reduces power consumption. That is, when the laser ranging apparatus does not need to perceive environmental conditions, a whole machine or part of devices can be put in a sleep mode. In the sleep mode, all or part of device are at a lowest power consumption until the devices are awakened again, thereby significantly reducing system power consumption, reducing temperature rise of the whole machine, increasing ambient temperature range where the whole machine can work normally, and saving energy to a greatest extent.

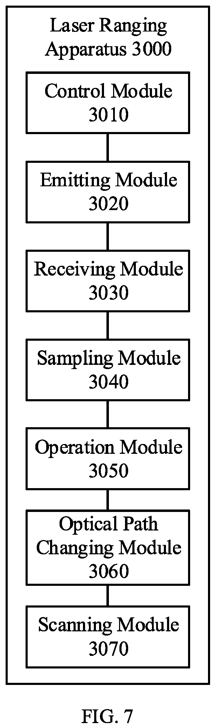

With reference to FIGS. 1 to 6, according to the embodiments of the present application, the laser ranging method is described above in detail. With reference to FIG. 7, according to an embodiment of the present application, the laser ranging apparatus is described below.

As shown in FIG. 7, according to the embodiment of the present application, a laser ranging apparatus 3000 includes: a control module 3010, at least one emitting module 3020, at least one receiving module 3030, at least one sampling module 3040, and at least one operation module 3050. Optionally, the laser ranging apparatus 3000 may also include an optical path changing module 3060 and may also include a scanning module 3070.

Specifically, the control module 3010 is configured to control the target component to switch from the first state to the second state when the target component in the laser ranging apparatus is idle. Power consumption of the target component in the second state is less than power consumption in the first state. The target component has at least one device in at least one module in the laser ranging apparatus. The emitting module 3020 is configured to emit a laser pulse. The receiving module 3030 is configured to receive an optical signal returned by the laser pulse after being reflected by an object and convert the optical signal into an electrical signal. The sampling module 3040 is configured to perform sampling processing on the electrical signal to acquire a sampling result. The operation module 3050 is configured to determine a distance to the object according to the sampling result.

Optionally, as an embodiment, the control module 3010 is further configured to: control the target component to switch from the second state to the first state.

Optionally, as an embodiment, a moment when the target component enters the first state is before the first preset period prior to a moment that the target component starts working.

Optionally, as an embodiment, a moment when the target component enters the first state is before the second preset period prior to a moment that the emitting module 3020 emits a laser pulse.

Optionally, as an embodiment, the target component includes at least two devices in the laser ranging apparatus. The control module 3010 is configured to sequentially control each of the at least two devices from the first state to the second state between two adjacent laser pulse emissions of the emitting module 3020.

Optionally, as an embodiment, the control module 3010 is configured to control the first device to switch from the first state to the second state when a first device of the at least two devices finishes working.

Optionally, as an embodiment, the control module 3010 is configured to: control a second device of the at least two devices to switch from the first state to the second state after a third preset period after a moment that the device 3020 emit a laser pulse. The second device is any device in at least one of the receiving module 3030, the sampling module 3040, and the operation module 3050.

Optionally, as an embodiment, the target component includes at least two devices in the laser ranging apparatus. The control module 3010 is configured to control the at least two devices to switch from the first state to the second state at a same time between two adjacent laser pulse emissions of the emitting module 3020.

Optionally, as an embodiment, the control module 3010 is configured to control the at least two devices to switch from the first state to the second state at the same time when the at least two devices finish working.

Optionally, as an embodiment, the control module 3010 is configured to: control the at least two devices to switch from the second state to the first state at a same time after the fourth preset period after a moment that the emitting module emits a laser pulse.

Optionally, as an embodiment, the laser ranging apparatus includes an emitting module 3020, a receiving module 3030, a sampling module 3040, and an operation module 3050.

Optionally, as an embodiment, the emitting module 3020 emits two adjacent laser pulses. The emitting module 3020 is configured to emit a laser pulse. The receiving module 3030 is configured to receive an optical signal returned by the laser pulse after being reflected by an object and convert the optical signal into an electrical signal. The one sampling module 3040 is configured to perform sampling processing on the electrical signal to acquire a sampling result. The operation module 3050 is configured to determine a distance to the object according to the sampling result.

Optionally, as an embodiment, the laser ranging apparatus includes an optical path changing module 3060, the emitting module 3020 and a plurality of receiving modules 3030. The optical path changing module 3060 is configured to: divide a laser pulse emitted by the emitting module 3020 into at least two laser pulses emitted at a same time along different paths or change one laser pulse emitted by the one emitting module 3020 to at least two laser pulses emitted along different paths at different times. The plurality of receiving modules 3030 and the at least two laser pulses have one-to-one correspondences and are respectively configured to receive optical signals returned by the corresponding laser pulses after being reflected by an object.

Optionally, as an embodiment, one laser pulse emitted by the one emitting module 3020 is changed by the optical path changing module 3060 at different times to at least two laser pulses emitted along different paths. The laser ranging apparatus also includes the sampling module 3040 and the operation module 3050. The sampling module 3040 is configured to perform sampling processing on the electrical signals respectively output by the multiple receiving modules 3030 at different times to acquire a sampling result corresponding to each electrical signal. The operation module 3050 is configured to: according to each sampling result output by the sampling module 3040 at different times, determine a distance to an object corresponding to the sampling result.

Optionally, as an embodiment, the laser ranging apparatus further includes a plurality of sampling modules 3040 and a plurality of operation modules 3050. The plurality of receiving modules 3030, the plurality of sampling modules 3040, and the plurality of operation modules 3050 correspond one-to-on. Each sampling module 3040 of the plurality of sampling modules 3040 is configured to: perform sampling processing on the electrical signal output by the corresponding receiving module 3030 to acquire a sampling result. Each operation module 3050 of the plurality of operation modules 3050 is configured to: according to a sampling result output by the corresponding sampling module 3040, determine a distance to an object corresponding to the sampling result.

Optionally, as an embodiment, the laser ranging apparatus includes a plurality of emitting modules 3020 and a plurality of receiving modules 3030. The plurality of emitting modules 3020 have one-to-one correspondence with the plurality of receiving modules 3030.

Optionally, as an embodiment, the laser ranging apparatus further includes a plurality of sampling modules 3040 and the operation module 3050. Different emitting modules 3020 of the plurality of emitting modules 3020 are configured to respectively emit a laser pulse at a same time or different times. Each receiving module 3030 of the plurality of receiving modules 3030 is configured to: receive an optical signal of the laser pulse emitted by the corresponding emitting module 3020 after being reflected by an object and convert the optical signal into an electrical signal. The sampling module 3040 is configured to: perform sampling processing on the electrical signal output by the corresponding receiving module 3030 to acquire a sampling result. The operation module 3050 is configured to determine a distance to the object corresponding to the sampling result.

Optionally, as an embodiment, the laser ranging apparatus further includes a plurality of sampling modules 3040 and the operation modules 3050. The plurality of emitting modules 3020, the plurality of receiving modules 3030, and the plurality of sampling modules 3040 have one-to-one correspondences. The computing module 3050 is connected to the plurality of sampling modules 3040 respectively. Different emitting modules 3020 of the plurality of emitting modules 3020 are configured to emit a laser pulse at different times. Each receiving module 3030 of the plurality of receiving modules 3030 is configured to: receive an optical signal of the laser pulse emitted by the corresponding emitting module 3020 after being reflected by an object and convert the optical signal into an electrical signal. Each sampling module 3040 of the plurality of sampling module 3040 is configured to: perform sampling processing on the electrical signal output by the corresponding receiving module 3030 to acquire a sampling result. The operation module 3050 is configured to determine a distance to the object corresponding to the sampling result.

Optionally, as an embodiment, the laser ranging apparatus further includes a plurality of sampling modules 3040 and a plurality of operation modules 3050. The plurality of emitting modules 3020, the plurality of receiving modules 3030, the plurality of sampling modules 3040, and the plurality of operation modules 3050 have one-to-one correspondences. The plurality of emitting modules 3020 are configured to respectively emit a laser pulse at the same time or different times. Each receiving module 3030 of the plurality of receiving modules 3030 is configured to: receive a laser pulse emitted by the corresponding emitting module 3020 and return an optical signal after being reflected by an object and convert the optical signal into an electrical signal. Each sampling module 3040 of the plurality of sampling modules 3040 is configured to: perform sampling processing on the electrical signal output by the corresponding receiving module 3030 to acquire a sampling result. Each operation module 3050 of the plurality of operation modules 3050 is configured to determine a distance to the object corresponding to the sampling result.

Optionally, as an embodiment, the target component is a device in the emitting module 3020 and/or the receiving module 3030. A quiescent current of the target component in the second state is lower than that in the first state.

Optionally, as an embodiment, the target component is a device in the sampling module 3040 and/or the operation module 3050. Flip frequency of the target component in the second state is lower than that in the first state.

Optionally, as an embodiment, the target component is disconnected from the power supply in the second state.

Optionally, as an embodiment, the control module 3010 is a programmable logic device (PLD).

Optionally, as an embodiment, the PLD is a field programmable logic gate array (FPGA) or a complex programmable logic device (CPLD).

Optionally, as an embodiment, the emitting module 3020 includes a laser emitting circuit.

Optionally, as an embodiment, the receiving module 3030 includes at least one of a photoelectric conversion circuit, an analog amplifier circuit, and a comparator.

Optionally, as an embodiment, the sampling module 3040 includes a time-to-digital converter TDC and/or an analog-to-digital converter ADC.

Optionally, as an embodiment, the emitting module 3020 is configured to emit a laser pulse sequence. The emission time interval of two adjacent laser pulses in the laser pulse sequence is a first time interval. An interval between a time when the emitting module 3020 emits a laser pulse and a time when the operation module 3050 determines a distance to an object reflecting the laser pulse is a second time interval. The first time interval is greater than 10 times the second time interval.

Optionally, as an embodiment, the laser ranging apparatus further includes: a scanning module 3070, for changing a propagation direction of the laser pulse sequence to emit. At least part of a light beam reflected by a detected object being incident on a laser ranging module after passing through the scanning module.

Optionally, as an embodiment, the scanning module 3070 includes at least one prism whose thickness changes in a radial direction, and a motor for driving the prism to rotate. The rotating prism is configured to refract the laser pulse sequence to different directions to emit.

In the laser ranging apparatus of the embodiments of the present application, when the target component of the modules included in the laser ranging apparatus is idle, the target component is controlled to switch from the second state to the first state. Power consumption in the second state is lower than that in the first state. Considering that each device in the laser ranging apparatus does not need to work all the time, and work at a same time, each device can be controlled to enter the first state in a certain sequence or at a same time so as to start working at any time or can be controlled to enter the second state and stop working. For example, an order can be determined by a signal and a data flow direction. A control switching in different states not only ensures measurement performance of a system, but also minimizes working time of each device and further reduces power consumption. That is, when the laser ranging apparatus does not need to perceive environmental conditions, a whole machine or part of the devices can be put in a sleep mode. In the sleep mode, all or part of the device is at a lowest power consumption until the device is awakened again, thereby significantly reducing system power consumption, reducing temperature rise of the whole machine, increasing ambient temperature range where the whole machine can work normally, and saving energy to a greatest extent.

A device of each embodiment of the present application may be implemented by memories and processors. Each memory is configured to store instructions for executing the method of each embodiment of the present application. The processors execute the above instructions, so that the device executes the method of each embodiment of the present application.

The processor mentioned in the embodiments of the present application may be a central processing unit (CPU), other general-purpose processor, a digital signal processor (DSP), and an application specific integrated circuit (ASIC), a field programmable gate array (FPGA) or other programmable logic device, a discrete gate or a transistor logic device, a discrete hardware component, etc. The general-purpose processor may be a microprocessor, any conventional processor, or the like.

The memory mentioned in the embodiments of the present application may be a volatile memory or a non-volatile memory, or both volatile and non-volatile memory. The non-volatile memory can be a read-only memory (ROM), a programmable read-only memory (PROM), an erasable programmable read-only memory (EPROM), an electrically erasable Programmable read-only memory (EEPROM) or flash memory. The volatile memory may be a random access memory (RAM), which is used as an external cache. By way of exemplary but not restrictive description, many forms of RAM are available, such as static random access memory (SRAM), dynamic random access memory (DRAM), synchronous dynamic random access memory (SDRAM), double data rate SDRAM (DDR SDRAM), enhanced synchronous dynamic random access memory (ESDRAM), synchronous link dynamic random access memory (SLDRAM)) and direct rambus RAM (DR RAM).

When the processor is a general-purpose processor, a DSP, a ASIC, a FPGA or other programmable logic device, discrete gate or transistor logic device, or discrete hardware component, the memory (storage module) is integrated in the processor.

The memories described herein are intended to include, but are not limited to, these and any other suitable types of memories.

The embodiments of the present application also provide a computer-readable storage medium on which instructions are stored. When the instructions are executed on a computer, the computer executes methods of the above method embodiments.

An embodiment of the present application also provides a computing device, which includes the computer-readable storage medium described above.

The embodiments of the present application can be applied to aircraft, especially in the field of Unmanned Aerial Vehicle (UAV).

The division of circuits, sub-circuits, and sub-units in the embodiments of the present application is only illustrative. Those skilled in the art may be aware that the circuits, the sub-circuits, and the sub-units of the examples described in the embodiments disclosed herein can be further divided or combined.

The above embodiments may be implemented in whole or in part by software, hardware, firmware or any combination thereof. When implemented by software, the above embodiments can be implemented in a form of computer program product in whole or in part. The computer program product includes one or more computer instructions. When the computer instructions are loaded and executed on a computer, the processes or functions according to the embodiments of the present application are generated in whole or in part. The computer can be a general-purpose computer, a dedicated computer, a computer network, or other programmable device. The computer instructions can be stored in a computer-readable storage medium or emitted from one computer-readable storage medium to another computer-readable storage medium. For example, the computer instructions can be sent from a website, computer, server, or data center to another website site, computer, server or data center by wired (such as coaxial cable, optical fiber, digital subscriber line (DSL)) or wireless (such as infrared, wireless, microwave, etc.) transmissions.. The computer-readable storage medium may be any available medium that can be accessed by a computer or a data storage device such as a server or data center including one or more available media integrations. The available media can be a magnetic media (for example, floppy disks, hard drives, tapes), an optical media (for example, high-density digital video discs (DVD), a semiconductor media (e.g., solid state disks (SSD)) or the like.

The embodiments of the present application are described by taking a total bit width of 16 bits as an example. The embodiments of the present application may be applicable to other bit widths.

"One embodiment" or "an embodiment" mentioned throughout the specification means that a specific feature, structure, or characteristic related to the embodiment is included in at least one embodiment of the present application. Therefore, appearances of "in one embodiment" or "in an embodiment" in various places throughout the specification do not necessarily refer to the same embodiment. In addition, the specific features, structures or characteristics can be combined in one or more embodiments in any suitable manner.

In various embodiments of the present application, sequence numbers of the above processes do not mean execution sequences. An execution sequence of each process should be determined by its function and internal logic and should not constitute any limitation to the implementation process of the embodiments of the present application.

In the embodiments of the present application, 'B corresponding to A" means that B is associated with A, and B can be determined according to A. Determining B based on A does not mean that B is determined only according to A, and B can also be determined according to A and/or other information.

The term "and/or" in the article is only an association relationship that describes associated objects, indicating that there can be three relationships. For example, A and/or B can mean that: A alone exists, A and B exist at a same time, and B exists alone. In addition, character "/" in the text generally indicates that the associated objects before and after are in an "or" relationship.

Those skilled in the art may be aware that units and algorithm steps of examples described in combination with the embodiments disclosed herein can be implemented by electronic hardware or a combination of computer software and electronic hardware. Whether the functions are executed by hardware or software depends on a specific application and design constraint conditions of a technical solution. Professionals and technicians can use different methods for each specific application to implement described functions, but such implementation should not be considered beyond the scope of the present application.

Those skilled in the art can clearly understand that, for description convenience and conciseness, specific working processes of the above systems, devices, and units can refer to the corresponding processes in the above method embodiment, which will not be repeated herein.

In several embodiments provided in the present application, the disclosed system, device, and method may be implemented in other ways. For example, the device embodiments described above are only illustrative. For example, the division of the unit is only a logical function division. There may be other division methods in actual implementations. For example, a plurality of units or components can be combined or integrated into another system, or some features can be omitted or not implemented. In addition, the displayed or discussed mutual coupling or direct coupling or communication connection may be indirect coupling or communication connection through some interfaces, devices or units, and may be in electrical, mechanical or other forms.

Units described as separate components may or may not be physically separate. A component displayed as a unit may or may not be a physical unit, that is, it may be in one place, or it may be distributed to a plurality of network units. Some or all of the units may be selected according to actual needs to achieve objectives of solutions of the embodiments.

In addition, all functional units in all the embodiment of the present application may be integrated into one processing unit, or each unit may exist alone physically, or two or more units may be integrated into one unit.

The above are only specific implementation manners of the present application. But the protection scope of the present application is not limited herein. Those skilled in the art can easily think of changes or substitutions within the technical scope disclosed in the present application, which should be covered by the protection scope of the present application. Therefore, the protection scope of the present application should be subject to the protection scope of the claims.

## Claims

1. A laser ranging method, comprising:
when a target component in a laser ranging apparatus is idle, controlling the target component to switch from a first state to a second state, power consumption of the target component in the second state being less than power consumption in the first state; wherein:
the laser ranging apparatus includes at least one emitting module, at least one receiving module, at least one sampling module, and at least one operation module, the target component being at least one device in at least one module in the laser ranging apparatus;
wherein the emitting module is configured to emit a laser pulse;
the receiving module is configured to receive an optical signal returned by the laser pulses after being reflected by an object, and convert the optical signal into an electrical signal;
the sampling module is configured to perform sampling processing on the electrical signal to acquire a sampling result; and
the operation module is configured to determine a distance to the object according to the sampling result.

2. The method according to claim 1, further comprising:
controlling the target component to switch from the second state to the first state.

3. The method according to claim 2, wherein a moment when the target component enters the first state is before a first preset period prior to a moment that the target component starts working.

4. The method according to claim 2 or claim 3, wherein a moment when the target component enters the first state is before a second preset period prior to a moment that the emitting module emits a laser pulse.

5. The method according to any one of claims 1 to 4, wherein:
the target component includes at least two devices in the laser ranging apparatus; and
controlling the target component to switch from the first state to the second state includes:
sequentially controlling each of the at least two devices to switch from the first state to the second state between two adjacent laser pulse emissions by the emitting module.

6. The method according to according to claim 5, wherein the sequentially controlling each of the at least two devices to switch from the first state to the second state, includes:
when a first device of the at least two devices finishes working, controlling the first device to switch from the second state to the first state.

7. The method according to according to claim 5 or claim 6, wherein the sequentially controlling each of the at least two devices to switch from the second state to the first state, includes:
after a third preset period after a moment that the emitting module emits the laser pulse, controlling a second device of the at least two devices to switch from the first state to the second state, the second device being any device in at least one of the receiving module, the sampling module, and the operation module.

8. The method according to any one of claims 1 to 4, wherein:
the target component includes at least two devices in the laser ranging apparatus; and
controlling the target component to switch from the first state to the second state includes:
controlling the at least two devices to switch from the first state to the second state at a same time between two adjacent laser pulse emissions by the emitting module.

9. The method according to claim 8, wherein controlling the at least two devices to switch from the first state to the second state at a same time, includes:
controlling the at least two devices to switch from the first state to the second state at a same time when the at least two devices finish working.

10. The method according to claim 8 or claim 9, wherein controlling the at least two devices to switch from the first state to the second state at a same time, includes:
after a fourth preset period after a moment that the emitting module emits a laser pulse, controlling the at least two devices to switch from the first state to the second state at a same time.

11. The method according to any of claims 1-10, wherein the laser ranging apparatus includes an emitting module, a receiving module, a sampling module and an operation module.

12. The method according to claim 11, wherein between two adjacent laser pulse emissions by the emitting module, the method further includes:
emitting a laser pulse through the emitting module;
receiving an optical signal returned by the laser pulse after reflected by an object through the receiving module, and converting the optical signal into an electrical signal;
performing sampling processing on the electrical signal through the sampling module to acquire a sampling result; and
determining a distance between the object and the laser ranging apparatus according to the sampling result through the operation module.

13. The method according to any one of claims 1 to 10, wherein the laser ranging apparatus includes an optical path changing module, an emitting module and a plurality of receiving modules, the method further includes:
dividing a laser pulse emitted by the one emitting module into at least two laser pulses simultaneously emitted along different paths by the optical path changing module, or changing a laser pulse emitted by the one emitting module to at least two laser pulses emitted along different paths at different times; and
the plurality of receiving modules have one-to-one correspondence with the at least two laser pulses, and being respectively configured to receive the optical signal returned by the corresponding laser pulse after being reflected by the object.

14. The method according to claim 13, wherein:
a laser pulse emitted by the emitting module is changed by the optical path changing module at different times to at least two laser pulses emitted along different paths; and
the laser ranging apparatus further includes a sampling module and an operation module, and the method further includes:
respectively performing sampling processing by the sampling module on the electrical signals output by the plurality of receiving modules at different times to respectively acquiring a sampling result corresponding to each electrical signal; and
according to each sampling result output by the sampling module at different times, determining a distance between the object and the laser ranging apparatus corresponding to the sampling result by the operation module.

15. The method according to claim 13, wherein the laser ranging apparatus further includes a plurality of sampling modules and a plurality of operation modules, the plurality of receiving modules, the plurality of sampling modules, and the plurality of operation modules having one-to-one correspondences, and the method further includes:
performing sampling processing on an electrical signal output by a corresponding receiving module through each sampling module of the plurality of sampling modules to acquire a sampling result; and
according to the sampling result output by the corresponding sampling module, determining a distance between the object and the laser ranging apparatus corresponding to the sampling result through each operation module of the plurality of operation modules.

16. The method according to any one of claims 1 to 10, wherein the laser ranging apparatus includes a plurality of emitting modules and a plurality of receiving modules, and the plurality of emitting modules have one-to-one correspondence with the plurality of receiving modules.

17. The method according to claim 16, wherein the laser ranging apparatus further includes a sampling module and an operation module, and the method further includes:
emitting a laser pulse by different emitting modules of the plurality of emitting modules at different times;
receiving an optical signal of the laser pulse emitted by the corresponding emitting module after being reflected by an object by each receiving module of the plurality of receiving modules, and converting the optical signal into an electrical signal;
performing sampling processing on the electrical signal output by different receiving modules by the sampling module at different times to acquire a sampling result; and
according to the sampling results output by the sampling module, determining a distance between the object and the laser ranging apparatus corresponding to the sampling result by the operation module at different times.

18. The method according to claim 16, wherein the laser ranging apparatus further comprises a plurality of sampling modules and an operation module, the plurality of emitting modules, the plurality of receiving modules, and the plurality of sampling modules have one-to-one correspondences, the operation module is connected to the plurality of sampling modules respectively, and the method further includes:
emitting a laser pulse through different emitting modules of the plurality of emitting modules at different times;
receiving an optical signal of the laser pulse emitted by the corresponding emitting module after being reflected by an object by each receiving module of the plurality of receiving modules, and converting the optical signals into an electrical signal;
performing sampling processing on the electrical signals output by different receiving modules by the sampling module at different times to acquire a sampling result; and
according to the sampling result output by the sampling module, determining a distance between the object and the laser ranging apparatus corresponding to the sampling results by the operation module at different times.

19. The method according to claim 16, wherein the laser ranging apparatus also includes a plurality of sampling modules and a plurality of operation modules, the plurality of emitting modules, the plurality of receiving modules, the plurality of sampling modules, and the plurality of operation modules have one-to-one correspondences with each other, and the method further includes:
emitting a laser pulse at a same time or at different times through the plurality of emitting modules;
receiving optical signals of the laser pulse emitted by the corresponding emitting module after being reflected by an object by each receiving module of the plurality of receiving modules, and converting the optical signals into an electrical signal;
performing sampling processing on the electrical signals output by different receiving modules by the sampling module at different times to acquire sampling results; and
according to the sampling results output by the sampling module, determining a distance between the object and the laser ranging apparatus corresponding to the sampling results by the operation module at different times.

20. The method according to any one of claims 1 to 19, wherein:
the target component is a device in the emitting module and/or the receiving module, and
a quiescent current of the target component in the second state is lower than a quiescent current in the first state.

21. The method according to any one of claims 1 to 20, wherein:
the target component is a device in the sampling module and/or the operation module, and
a flip frequency of the target component in the second state is lower than a flip frequency in the first state.

22. The method according to any one of claims 1 to 19, wherein the target component is disconnected from a power supply in the second state.

23. The method according to any one of claims 1 to 22, wherein the emitting module includes a laser emitting circuit.

24. The method according to any one of claims 1 to 23, wherein the receiving module includes at least one of a photoelectric conversion circuit, an analog amplifier circuit, and a comparator.

25. The method according to any one of claims 1 to 24, wherein the sampling module includes a time-to-digital converter TDC and/or an analog-to-digital converter ADC.

26. The method according to any one of claims 1 to 24, wherein:
the emitting module is configured to emit a laser pulse sequence; and
an emission time interval of two adjacent laser pulses in the laser pulse sequence is a first time interval, an interval between a moment when the emitting module emits the laser pulse and a moment when the operation module determines a distance between the object and the laser ranging apparatus reflecting the laser pulse is a second time interval, and the first time interval is 10 times greater than the second time interval.

27. A laser ranging apparatus, comprising:
a control module configured to: when a target component in the laser ranging apparatus is idle, control the target component to switch from a first state to a second state, power consumption of the target component in the second state being less than power consumption in the first state, the laser ranging apparatus including at least one emitting module, at least one receiving module, at least one sampling module and at least one operation module, and the target component is at least one device in at least one module in the laser ranging apparatus;
the emitting module is configured to send a laser pulse;
the receiving module is configured to receive an optical signal returned by the laser pulse after being reflected by an object, and convert the optical signal into an electrical signal;
the sampling module is configured to perform sampling processing on the electrical signal to acquire a sampling result; and
the operation module is configured to determine a distance between the object and the laser ranging apparatus according to the sampling result.

28. The device according to claim 27, wherein the control module is further configured to control the target component to switch from the second state to the first state.

29. The device according to claim 28, wherein a moment when the target component enters the first state is earlier than a moment when the target component starts working for at least first period.

30. The device according to claim 28 or 29, wherein a moment when the target component enters the first state is before a second preset period when the emitting module emits a laser pulse.

31. The device according to any one of claims 27 to 30, wherein:
the target component includes at least two devices in the laser ranging apparatus; and
the control module is configured to sequentially control each of the at least two devices to switch from the first state to the second state between two adjacent laser pulse emissions by the emitting module.

32. The device according to claim 31, wherein the control module is configured to: when the first device of the at least two devices finishes working, control the first device to switch from the first state to the second state.

33. The device according to claim 31 or 32, wherein the control module is configured to: after the third preset period after a moment that the emitting module emits the laser pulses, control the second device of the at least two devices to switch from the first state to the second state, the second device is any device in at least one of the receiving module, the sampling module, and the operation module.

34. The device according to any one of claims 27 to 30, wherein:
the target component includes at least two devices in the laser ranging apparatus; and
the control module is configured to control the at least two devices to switch from the first state to the second state at a same time between two adjacent laser pulse emissions by the emitting module.

35. The device according to claim 34, wherein the control module is configured to control the at least two devices to switch from the first state to the second state at a same time when the at least two devices finish working.

36. The device according to claim 34 or 35, wherein the control module is configured to control the at least two devices to switch from the second state to the first state at a same time after the fourth preset period after a moment that the emitting module emits a laser pulse.

37. The device according to any one of claims 27 to 36, wherein the laser ranging apparatus includes one emitting module, one receiving module, one sampling module and one operation module.

38. The device according to claim 37, wherein between two adjacent laser pulse emissions by the emitting module:
the one emitting module is configured to emit a laser pulse;
the one receiving module is configured to receive an optical signal returned by the laser pulse after being reflected by an object, and converting the optical signal into an electrical signal;
the one sampling module is configured to perform sampling processing on the electrical signal to acquire a sampling result; and
the one operation module is configured to determine a distance between the object and the laser ranging apparatus according to the sampling result.

39. The device according to any one of claims 27 to 36, wherein:
the laser ranging apparatus includes an optical path changing module, an emitting module and a plurality of receiving modules;
the optical path changing module is configured to divide a laser pulse emitted by the one emitting module into at least two laser pulses emitted along different paths at a same time, or changing a laser pulse emitted by the one emitting module to at least two laser pulses emitted along different paths at different times; and
the plurality of receiving modules have one-to-one correspondences with the at least two laser pulses and are respectively configured to receive the optical signal.

40. The device according to claim 39, wherein:
a laser pulse emitted by the one emitting module is changed to at least two laser pulses emitted along the different paths by the optical path changing module at different times;
the laser ranging apparatus also includes a sampling module and an operation module;
the one sampling module is configured to respectively perform sampling processing on the electrical signals respectively output by the plurality of receiving modules at different times, and acquire the sampling result corresponding to each electrical signal respectively; and
the one operation module is configured to determine a distance between the object and the laser ranging apparatus corresponding to the sampling results according to each sampling result output by the sampling module at different times.

41. The device according to claim 39, wherein:
the laser ranging apparatus includes a plurality of emitting modules and a plurality of receiving modules, and the plurality of receiving modules, the plurality of emitting modules, and the plurality of operation modules have one-to-one correspondences;
each sampling module of the plurality of sampling modules is configured to perform sampling processing on the electrical signal output by the corresponding receiving module to obtain a sampling result; and
each arithmetic module of the plurality of arithmetic modules is configured to determine the distance between the object and the laser ranging apparatus corresponding to the sampling result according to the sampling result output by the corresponding sampling module.

42. The device according to any one of claims 27 to 36, wherein the laser ranging apparatus includes a plurality of transmitting modules and a plurality of receiving modules, the plurality of transmitting modules have one-to-one correspondences with the plurality of receiving modules.

43. The device according to claim 42, wherein:
the laser ranging apparatus also includes a sampling module and an operation module;
different emitting modules among the plurality of emitting modules are configured to emit a laser pulse at different times;
each receiving module of the plurality of receiving modules is configured to receive a laser pulse emitted by a corresponding emitting module and returning an optical signal after being reflected by an object, and converting the optical signal into an electrical signal;
the one sampling module is configured to respectively perform sampling processing on the electrical signals respectively output by the plurality of receiving modules at different times, and acquire the sampling results corresponding to each electrical signal respectively; and
the one operation module is configured to determine a distance between the object and the laser ranging apparatus corresponding to the sampling result according to each sampling result output by the sampling module at different times.

44. The device according to claim 42, wherein:
the laser ranging apparatus also includes a plurality of sampling modules and an operation module, the plurality of emitting modules, the plurality of receiving modules, and the plurality of sampling modules have one-to-one correspondences, and the one operation module is connected to the plurality of sampling modules respectively;
different emitting modules among the plurality of emitting modules are configured to emit a laser pulse at different times;
each receiving module of the plurality of receiving modules is configured to receive a laser pulse emitted by a corresponding emitting module and returning an optical signal after being reflected by an object, and converting the optical signal into an electrical signal;
each sampling module of the plurality of sampling modules is configured to perform sampling processing on the electrical signal output by the corresponding receiving module to acquire the sampling result; and
the one operation module is configured to determine a distance between the object and the laser ranging apparatus corresponding to the sampling result according to the sampling result output by the sampling module at different times.

45. The device according to claim 42, wherein:
the laser ranging apparatus also includes a plurality of sampling modules and a plurality of operation modules, the plurality of emitting modules, the plurality of receiving modules, the plurality of sampling modules, and the plurality of operation modules have one-to-one correspondences;
the plurality of emitting modules is configured to respectively emit a laser pulse at a same time or different times;
each receiving module of the plurality of receiving modules is configured to receive a laser pulse emitted by a corresponding emitting module and returning an optical signal after being reflected by an object, and converting the optical signal into an electrical signal;
each sampling module of the plurality of sampling modules is configured to perform sampling processing on the electrical signal output by the corresponding receiving module to acquire the sampling result; and
each operation module of the plurality of operation modules is configured to determine a distance between the object and the laser ranging apparatus corresponding to the sampling results according to the sampling result output by the corresponding sampling module.

46. The device according to any one of claims 27 to 45, wherein:
the target component is a device in the emitting module and/or the receiving module, and
a quiescent current of the target component in the second state is lower than a quiescent current in the first state.

47. The device according to any one of claims 27 to 46, wherein:
the target component is a device in the sampling module and/or the operation module, and
a flip frequency of the target component in the second state is lower than a flip frequency in the first state.

48. The device according to any one of claims 27 to 45, wherein the target component is disconnected from the power supply in the second state.

49. The device according to any one of claims 27 to 48, wherein the control module is a programmable logic device PLD.

50. The device according to claim 49, wherein the PLD is a field programmable logic gate array FPGA or a complex programmable logic device CPLD.

51. The device according to any one of claims 27 to 50, wherein the emitting module includes a laser emitting circuit.

52. The device according to any one of claims 27 to 51, wherein the receiving module includes at least one of a photoelectric conversion circuit, an analog amplifier circuit, and a comparator.

53. The device according to any one of claims 27 to 50, wherein the emitting module includes a laser emitting circuit.

54. The device according to any one of claims 27 to 53, wherein:
the emitting module is configured to emit a laser pulse sequence; and
an emission time interval of two adjacent laser pulses in the laser pulse sequence is a first time interval, an interval between a time when the emitting module emits the laser pulse and a time when the operation module determines a distance between objects reflecting the laser pulse is a second time interval, the first time interval is greater than 10 times the second time interval.

55. The device according to any one of claims 27 to 54, further comprises:
a scanning module, for changing a propagation direction of the laser pulse sequence to emit, at least part of a light beam reflected by a detected object being incident on a laser ranging module after passing through the scanning module.

56. The device according to claim 55, wherein:
the scanning module includes at least one prism whose thickness varies in a radial direction, and a motor for driving the prism to rotate; and
the rotating prism is configured to refract the laser pulse sequence to different directions.
